# FASCICULE DE BREVET EUROPEEN

(11) **EP 1 510 719 B1**
(45) Date de publication et mention de la délivrance du brevet: **16.04.2008**
(21) Numéro de dépôt: 04291907.6
(22) Date de dépôt: 27.07.2004
(51) Int. Cl.: F16D 55/36

(54) **Ensemble de freinage d'aéronef**
Flugzeugbremseinheit
Aircraft brake assembly

(30) Priorité: 28.08.2003 FR 0310246
(43) Date de publication de la demande: 02.03.2005
(73) Titulaire: MESSIER-BUGATTI, 78140 Velizy Villacoublay (FR)
(72) Inventeur: Narcy, Jean, 81600 Tecou (FR); Chico, Philippe, 92100 Boulogne Billancourt (FR)
(74) Mandataire: Jaunez, Xavier

(56) Documents cités:
- EP-A- 0 936 373
- WO-A-01/20188
- GB-A- 1 302 216
- US-A- 3 887 041
- US-A- 5 944 147

## Description

### DOMAINE DE L'INVENTION

La présente invention concerne le domaine du freinage des aéronefs, et plus particulièrement un ensemble de freinage d'aéronef du type comportant une pile de disques entourant axialement un essieu de roue.

### ARRIERE-PLAN DE L'INVENTION

Les ensembles de freinage d'aéronef de type conventionnel comportent une pile de disques entourant coaxialement un essieu de roue, ladite pile étant composée alternativement de disques rotors liés en rotation avec la roue et de disques stators liés en rotation avec un tube de torsion. La pile de disques est pressée entre une pièce arrière de retenue et les poussoirs d'une pluralité d'actionneurs agencés circonférentiellement sur une couronne avant de support, conformément au préambule de la revendication 1.

Dans les conceptions anciennes qui ont été utilisées pendant de longues années, on utilisait des actionneurs hydrauliques, qui étaient fixés sur une couronne dite hydraulique sur laquelle était montées les différentes canalisations associées. On pourra par exemple se référer aux documents US-A-5 944 147, US-A-3 887 041 et GB-A-1 302 216. Les ensembles de freinage étaient alors constitués de trois ensembles, à savoir un puits de chaleur constitué par la pile de disques, un tube de torsion et une pièce arrière de retenue associée, et une couronne hydraulique. Dans ce cas, pour toute intervention de réparation ou de maintenance sur l'ensemble de freinage, on avait l'habitude de déposer systématiquement les trois ensembles précités, afin de pouvoir les démonter et effectuer les interventions nécessaires.

Depuis quelques années, les constructeurs ont cherché à remplacer les actionneurs hydrauliques traditionnels par des actionneurs électro-mécaniques. Ceci permet de simplifier la conception, grâce à la suppression des canalisations hydrauliques qui étaient auparavant nécessaires, mais oblige à prévoir des procédés sophistiqués de commande pour préserver une sécurité et une fiabilité absolues. La maintenance s'en trouve également simplifiée, dans la mesure où l'on a moins d'interventions à effectuer sur la couronne et les actionneurs. En effet, les actionneurs hydrauliques comportaient traditionnellement des éléments à déformation plastique qui nécessitaient un remplacement complet pour réinitialiser les poussoirs une fois ceux-ci arrivés en bout de course après un cycle d'usure des disques de la pile de disques. L'utilisation d'actionneurs électromécaniques, en particulier équipés chacun d'un système d'entraînement du poussoir du type vis-écrou, facilite considérablement la réinitialisation de l'ensemble de freinage après un cycle d'usure des disques. Par suite, les principales interventions concernent alors essentiellement le remplacement total ou partiel des disques de la pile de disques.

Pour l'arrière-plan technologique concernant le remplacement des disques de carbone après un cycle d'usure, on pourra se référer aux documents US-A-4 742 895, US-A-5 494 138, US-A-5 509 507, US-A-5 558 186, et US-A-5 86-2 890. On pourra également se référer au document US-A-5 992 577 de la demanderesse qui décrit un procédé de substitution particulièrement avantageux.

Dans la plupart des systèmes récents utilisant des actionneurs électro-mécaniques, on prévoit, comme c'était le cas avec les actionneurs hydrauliques, un tube de torsion qui se prolonge vers l'arrière par une pièce de retenue monobloc avec ledit tube, lequel tube de torsion est boulonné sur la couronne supportant les actionneurs (voir par exemple le document WO-A-01/20188), ou en variante sur une collerette de l'essieu de roue, auquel cas la couronne supportant les actionneurs est fixée directement sur le tube de torsion (voir par exemple le document EP-A-0 936 373). Avec cette conception, lorsque l'on veut déposer l'ensemble de disques, il est bien entendu nécessaire, après avoir enlevé la roue, de dégager le bloc assemblé constitué par le tube de torsion et la pièce arrière de retenue. Dans la pratique, on procède à l'enlèvement de tout l'ensemble fonctionnel, y compris la couronne avec les actionneurs électro-mécaniques qui sont fixés sur celle-ci. La dépose des disques ne peut donc en aucun cas s'effectuer in situ, mais en atelier, après démontage de l'ensemble constitué par le tube de torsion et la pièce arrière de retenue. En particulier, dans le cas de l'ensemble de freinage décrit dans le document EP-A-0 936 373 précité, le tube de torsion est toujours retiré avec la couronne supportant les actionneurs électro-mécaniques, le démontage des deux pièces pour accéder à la pile de disques ne se faisant qu'en atelier.

On a également proposé de réaliser la couronne de support des actionneurs électro-mécaniques sous la forme d'un disque faisant partie du train d'atterrissage. On pourra ainsi se reporter au document EP-A-1 084 949 décrivant un ensemble de freinage dans lequel la couronne de support des actionneurs est d'une pièce avec l'essieu de roue. Là encore, le tube de torsion est d'une pièce avec la pièce arrière de retenue, et la reprise du couple est assurée par des systèmes de clavettes. Un tel agencement est sensiblement plus intéressant que les précédants, dans la mesure où il permet de retirer séparément l'ensemble constitué par le tube de torsion et la pile de disques, en laissant sur place les actionneurs montés sur la couronne qui est constituée par une collerette de l'essieu. Néanmoins, on ne peut éviter la dépose du tube de torsion si l'on veut dégager la pile de disques.

### OBJET DE L'INVENTION

La présente invention a pour objet de concevoir un ensemble de freinage d'aéronef ne présentant pas les inconvénients précités, et permettant en particulier la dépose d'une pile de disques dans le cadre d'une opération de maintenance avec un minimum de démontages.

L'invention a également pour objet de réaliser un ensemble de freinage dont la structure permet d'abaisser sensiblement le poids par rapport aux réalisations antérieures précitées.

### DEFINITION GENERALE DE L'INVENTION

Le problème précité est résolu conformément à l'invention grâce à un ensemble de freinage d'aéronef, comportant une pile de disques entourant coaxialement un essieu de roue, ladite pile étant composée alternativement de disques rotors liés en rotation avec la roue et de disques stators liés en rotation avec un tube de torsion, et étant pressée entre une pièce arrière de retenue et les poussoirs d'une pluralité d'actionneurs électro-mécaniques agencés circonférentiellement sur une couronne avant de support, le tube de torsion et la couronne supportant les actionneurs électro-mécaniques constituant un ensemble monobloc, et la pièce arrière de retenue étant fixée de manière démontable sur ledit ensemble monobloc en extrémité de celui-ci.

Ainsi, si l'on veut déposer la pile de disques, il suffit de démonter la pièce arrière de retenue, en laissant en place sur l'essieu l'ensemble monobloc formant couronne et tube de torsion. Une telle opération peut être envisageable directement sur piste, si l'on veut seulement remplacer la pile de disques usés par une nouvelle pile de disques.

De préférence, l'ensemble monobloc formant couronne et tube de torsion présente une bride unitaire (c'est-à-dire d'une pièce avec l'ensemble monobloc) au niveau du raccordement entre couronne et tube de torsion, ladite bride s'étendant dans un plan perpendiculaire à l'axe dudit ensemble et étant fixée sur une collerette saillante de l'essieu.

Avantageusement, la fixation de la pièce arrière de retenue sur l'ensemble monobloc, tout comme celle de l'ensemble monobloc sur l'essieu, est assurée par des moyens de boulonnage.

Conformément à un mode d'exécution avantageux, la partie couronne de l'ensemble monobloc comprend une pluralité d'oreilles s'étendant radialement en saillie, chaque oreille supportant un actionneur électro-mécanique.

Avantageusement alors, les oreilles de la partie couronne de l'ensemble monobloc s'étendent dans un plan qui est décalé vers l'avant par rapport au plan de la bride de fixation dudit ensemble. En particulier, chaque actionneur électro-mécanique comporte un boîtier logeant un système vis-écrou associé à l'entraînement du poussoir dudit actionneur, et un moteur électrique associé à ce boîtier, ledit boîtier traversant l'oreille correspondante sur laquelle il est directement fixé.

Dans un mode particulier de réalisation, le moteur électrique de chaque actionneur électro-mécanique s'étend dans une direction circonférentielle, et ledit moteur est également fixé sur la partie couronne par un appendice associé de celle-ci agencé entre deux oreilles adjacentes.

Avantageusement enfin, l'ensemble monobloc formant couronne et tube de torsion est réalisé dans un même matériau.

D'autres caractéristiques et avantages de l'invention apparaîtront plus clairement à la lumière de la description qui va suivre et des figures du dessin annexé, concernant un mode de réalisation particulier.

### BREVE DESCRIPTION DES DESSINS

Il sera fait référence aux figures du dessin annexé où :
- la figure 1 illustre en coupe axiale un ensemble de freinage d'aéronef conforme à l'invention ;
- la figure 2 est une vue en bout de l'ensemble précité, du côté des actionneurs électro-mécaniques, la collerette d'essieu servant à la fixation de l'ensemble n'étant pas représentée.

### DESCRIPTION DETAILLEE DE L'INVENTION

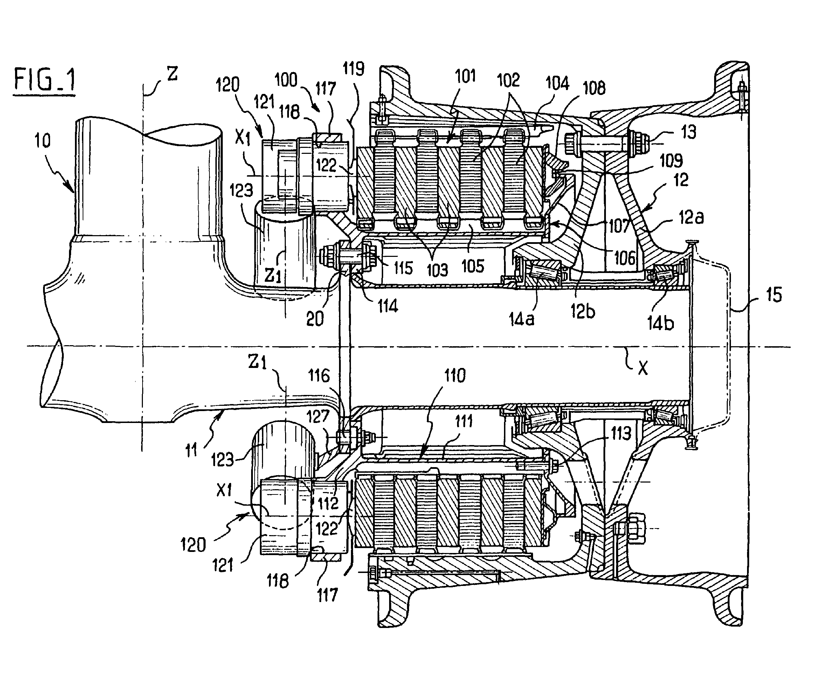

La figure 1 permet de distinguer une structure classique de train d'atterrissage avec une tige essentiellement verticale 10 d'axe Z se terminant inférieurement par deux essieux d'axe X horizontal, dont un seul est visible ici. L'essieu 11 porte une roue 12, ici réalisée sous la forme de deux composants accolés 12a, 12b, qui sont solidarisés entre eux par des moyens de boulonnage 13. La roue 12 repose par l'intermédiaire de roulements 14a, 14b sur l'extrémité de l'essieu 11. La partie terminale creuse de l'essieu 11 loge habituellement des appareils associés à une génération tachymétrique pour la mesure de la vitesse de la roue, lesquels appareils n'ont pas été représentés ici. On a seulement figuré, en trait mixte, le capotage de fermeture 15 qui est fixé sur la roue 12.

Pour le freinage de la roue 12, il est prévu un ensemble de freinage noté 100. Cet ensemble de freinage comporte une pile de disques 101 entourant coaxialement l'essieu de roue 11.

La pile de disques 101 est composée alternativement de disques rotors 102 qui sont liés en rotation avec la roue 12 et de disques stators 103 qui sont liés en rotation avec un élément tubulaire 111 appelé tube de torsion. A cet effet, la roue 12 est équipée de barrettes axiales 104 qui passent dans des encoches périphériques des disques rotors 102, ce qui assure le couplage en rotation entre lesdits disques et la roue 12. L'élément tubulaire formant tube de torsion 111 présente de la même façon des barrettes axiales 105 qui passent dans des encoches périphériques des disques stators 103. Les disques 102, 103 de la pile de disques 101 sont en fibre de carbone. Le nombre de disques illustrés ici ne constitue naturellement qu'un exemple, mais dans tous les cas, les disques formant les deux extrémités de la pile de disques sont des disques solidaires du tube de torsion, c'est-à-dire qu'il s'agit de disques stators.

La pile de disques 101 est agencée entre une pièce arrière de retenue 106 et un ensemble d'actionneurs électro-mécaniques 120 qui sont agencés circonférentiellement sur une couronne avant de support. La pièce arrière de retenue 106 est ici constituée par une plaque annulaire 107 équipée d'ergots 109 permettant la fixation d'une plaque arrière 108. En variante, on pourra prévoir des systèmes de retenue à patins ponctuels répartis sur la circonférence de la pièce arrière de retenue. Chaque actionneur électro-mécanique 120 présente un poussoir 122, de sorte que la pile de disques 101 peut être pressée entre la pièce arrière de retenue 106 et les poussoirs 122 des actionneurs électro-mécaniques 120 agencés circonférentiellement sur la couronne avant de support notée 112.

Conformément à un aspect essentiel de l'invention, le tube de torsion 111 et la couronne 112 supportant les actiopneurs électro-mécaniques 120 constituent un ensemble monobloc noté 110 qui est fixé sur l'essieu 11, et la pièce arrière de retenue 106 est fixée de manière démontable sur ledit ensemble monobloc 110 en extrémité de celui-ci.

La fixation de la pièce arrière de retenue 106 sur l'ensemble monobloc 110 est assurée par des moyens de boulonnage 113, agencés ici au niveau des barrettes axiales de clavetage 105.

L'ensemble monobloc 110 formant couronne 112 et tube de torsion 111 présente quant à lui une bride unitaire 114 au niveau du raccordement entre couronne et tube de torsion, ladite bride s'étendant dans un plan perpendiculaire à l'axe X et étant fixée de manière démontable sur une collerette saillante 20 de l'essieu 11. En l'espèce, la fixation de l'ensemble monobloc 110 sur l'essieu 11 est assurée par des moyens de boulonnage 115 passant dans les ouvertures associées de la collerette 20 de l'essieu 11 et de la bride unitaire 114 de l'ensemble monobloc 110. En plus des boulons d'assemblage 115, on a également prévu ici des pions de centrage 116 garantissant le calage angulaire parfait de l'ensemble monobloc 110 par rapport à l'essieu 11.

Ainsi que cela est aisé à comprendre, si l'on veut déposer la pile de disques 101, il suffit de démonter la pièce arrière de retenue 106 en enlevant les boulons d'assemblage 113 pour pouvoir ensuite accéder à, et retirer dans une direction axiale, la pile de disques. Cette intervention est ainsi possible en laissant sur place l'ensemble monobloc formant couronne et tube de torsion. On peut alors aisément faire une substitution in situ par une nouvelle pile de disques, après avoir rétracté électriquement chacun des actionneurs.

On va maintenant décrire plus en détail la partie couronne de l'ensemble monobloc 110, qui assure le support des actionneurs électro-mécaniques 120.

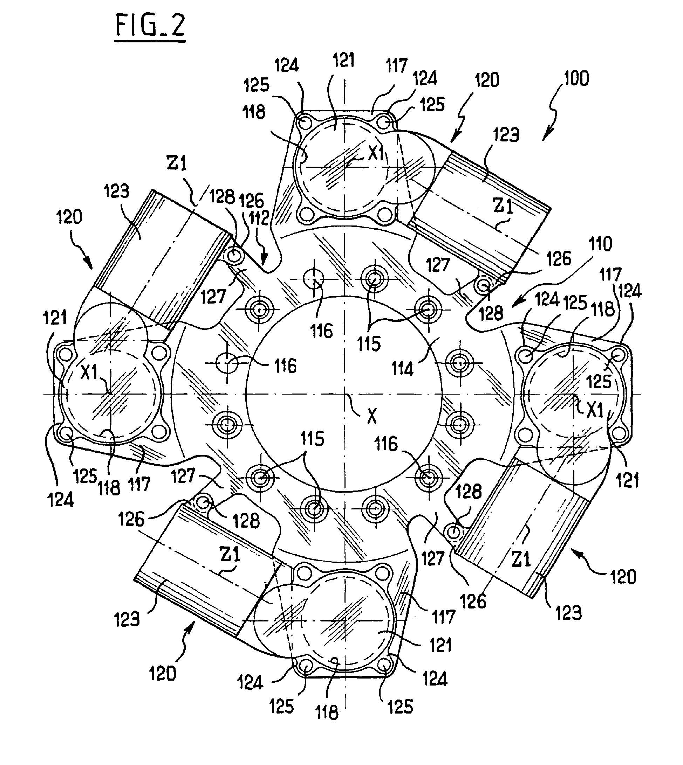

Ainsi que cela est visible sur les figures 1 et 2, la partie couronne 112 de l'ensemble monobloc 110 comprend une pluralité d'oreilles 117, ici au nombre de quatre, qui s'étendent radialement en saillie, chaque oreille supportant un actionneur électro-mécanique 120. Il convient de noter que les oreilles 117 de la partie couronne 112 de l'ensemble monobloc 110 s'étendent dans un plan perpendiculaire à l'axe X, qui est en l'espèce décalé vers l'avant par rapport au plan de la bride 114 de fixation dudit ensemble. Ce déport permet une meilleure intégration des actionneurs électro-mécaniques 120, et en particulier de leur moteur électrique.

En l'espèce, chaque actionneur électro-mécanique 120 comporte un boîtier 121 logeant un système vis-écrou (non visible sur les figures) qui est associé à l'entraînement du poussoir 122 dudit actionneur, et un moteur électrique 123 associé à ce boîtier, en étant ici fixé audit boîtier en porte-à-faux (on pourra naturellement prévoir d'autres structures d'actionneurs, avec un moteur entourant le système vis-écrou). Chaque boîtier 121 logeant un système vis-écrou d'entraînement du poussoir a un axe central X1 qui est parallèle à l'axe X de l'essieu 11. Le moteur électrique 123 de chaque actionneur électro-mécanique 120, pour l'agencement présentement illustré, s'étend dans une direction circonférentielle Z1.

Ainsi que cela est mieux visible sur la figure 2, le boîtier 121 présente quatre appendices périphériques 124 permettant une fixation par des boulons 125 sur l'oreille concernée 117. Il convient de noter que le boîtier 121 traverse en outre l'oreille correspondante 117 sur laquelle il est directement fixé, en passant par une ouverture 118 de ladite oreille, ainsi que cela est mieux visible sur la figure 1.

Si on le souhaite, on pourra compléter le support du moteur électrique 123, lequel est monté en porte à faux sur le boîtier 121, par un boulonnage complémentaire spécifique. On a illustré en l'espèce un tel boulonnage spécifique, en prévoyant une appendice 126 sur le boîtier du moteur 123 et un appendice 127 sur la partie couronne 112, ce dernier appendice étant agencé entre deux oreilles adjacentes 117, afin de permettre la mise en place d'un boulon de fixation 128. Une telle fixation complémentaire en extrémité du boîtier du moteur électrique 123 permet d'avoir un ensemble parfaitement rigide, et ce sans entraîner d'augmentation sensible du poids.

Si l'on souhaite procéder à une opération de maintenance uniquement sur l'un ou l'autre des actionneurs 120, il suffit alors de démonter les boulons de fixation 125, 128 de l'actionneur concerné pour retirer celui-ci sans avoir à démonter tout l'ensemble monobloc formant couronne et tube de torsion.

Sur la figure 1, on a en outre illustré un écran thermique 119 disposé au niveau des poussoirs 122 des différents actionneurs électro-mécaniques 120. Cet écran permet de protéger les systèmes d'entraînement associés aux poussoirs 122 des actionneurs.

De préférence enfin, l'ensemble monobloc 110 formant couronne 112 et tube de torsion 111 sera réalisé dans un même matériau, par exemple en acier.

L'invention n'est pas limitée au nombre d'actionneurs électro-mécaniques ni à la structure de ceux-ci, et on pourra prévoir en variante un nombre différent d'actionneurs et/ou un agencement de fixation différent sur la partie couronne de l'ensemble monobloc 110.

Plus généralement, l'invention n'est pas limitée au mode de réalisation qui vient d'être décrit, mais englobe au contraire toute variante reprenant, avec des moyens équivalents, les caractéristiques essentielles énoncées plus haut.

## Revendications

1. Ensemble de freinage d'aéronef, comportant une pile de disques (101) entourant coaxialement un essieu de roue (11), ladite pile étant composée alternativement de disques rotors (102) liés en rotation avec la roue (12) et de disques stators (103) liés en rotation avec un tube de torsion, et étant pressée entre une pièce arrière de retenue (106) et les poussoirs (122) d'une pluralité d'actionneurs électro-mécaniques (120) agencés circonférentiellement sur une couronne avant de support, **caractérisé en ce que** le tube de torsion (111) et la couronne (112) supportant les actionneurs électro-mécaniques (120) constituent un ensemble monobloc (110), et la pièce arrière de retenue (106) est fixée de manière démontable sur ledit ensemble monobloc (110) en extrémité de celui-ci.

2. Ensemble de freinage d'aéronef selon la revendication 1, **caractérisé en ce que** l'ensemble monobloc (110) formant couronne (112) et tube de torsion (111) présente une bride unitaire (114) au niveau du raccordement entre couronne et tube de torsion, ladite bride s'étendant dans un plan perpendiculaire à l'axe (X) dudit ensemble et étant fixée sur une collerette saillante (20) de l'essieu (11).

3. Ensemble de freinage d'aéronef selon la revendication 1 ou la revendication 2, **caractérisé en ce que** la fixation de la pièce arrière de retenue (106) sur l'ensemble monobloc (110), tout comme celle de l'ensemble monobloc (110) sur l'essieu (11), est assurée par des moyens de boulonnage (113 ; 115).

4. Ensemble de freinage d'aéronef selon l'une quelconque des revendications 1 à 3, **caractérisé en ce que** la partie couronne (112) de l'ensemble monobloc (110) comprend une pluralité d'oreilles (117) s'étendant radialement en saillie, chaque oreille (117) supportant un actionneur électro-mécanique (120).

5. Ensemble de freinage d'aéronef selon la revendication 4, **caractérisé en ce que** les oreilles (117) de la partie couronne (112) de l'ensemble monobloc (110) s'étendent dans un plan qui est décalé vers l'avant par rapport au plan de la bride de fixation (114) dudit ensemble.

6. Ensemble de freinage selon la revendication 5, **caractérisé en ce que** chaque actionneur électro-mécanique (120) comporte un boîtier (121) logeant un système vis-écrou associé à l'entraînement du poussoir (122) dudit actionneur, et un moteur électrique (123) associé à ce boîtier, ledit boîtier (121) traversant l'oreille correspondante (117) sur laquelle il est directement fixé.

7. Ensemble de freinage selon la revendication 6, **caractérisé en ce que** le moteur électrique (123) de chaque actionneur électro-mécanique (120) s'étend dans une direction circonférentielle (Zl), et ledit moteur (123) est également fixé sur la partie couronne (112) par un appendice associé (127) de celle-ci agencé entre deux oreilles (117) adjacentes.

8. Ensemble de freinage selon l'une quelconque des revendications 1 à 7, **caractérisé en ce que** l'ensemble monobloc (110) formant couronne (112) et tube de torsion (111) est réalisé dans un même matériau.

## Claims

1. An aircraft brake assembly comprising a stack of disks (101) surrounding a wheel axle (11) coaxially, said stack being made up of alternating rotor disks (102) constrained in rotation with the wheel (12), and stator disks (103) constrained in rotation with a torsion tube, and being pressed between a rear retaining piece (106) and the pushers (122) of a plurality of electro-mechanical actuators (120) arranged circumferentially on front support ring, the assembly being **characterized in that** the torsion tube (111) and the ring (112) supporting the electro-mechanical actuators (120) together constitute a one-piece unit (110, and the rear retaining piece (106) is fastened in separable manner on said one-piece unit (110) at one end thereof.

2. An aircraft brake assembly according to claim 1, **characterized in that** the one-piece unit (110) forming the ring (112) and the torsion tube (111) presents a single flange (114) where the ring and the torsion tube join each other, said flange extending in a plane perpendicular to the axis (X) of said assembly and being fastened to a projecting collar (20) on the axle (11).

3. An aircraft brake assembly according to claim 1 or claim 2, **characterized in that** the rear retaining piece (106) is fastened to the one-piece unit (110), and the one-piece unit (110) is fastened to the axle (11) by bolt means (113; 115).

4. An aircraft brake assembly according to any one of claims 1 to 3, **characterized in that** the ring portion (112) of the one-piece unit (110) has a plurality of lugs (117) projecting radially, each lug (117) supporting an electro-mechanical actuator (120).

5. An aircraft brake assembly according to claim 4, **characterized in that** the lugs (117) of the ring portion (112) of the one-piece unit (110) extend in a plane that is offset forwards relative to the plane of the fastening flange (114) of said assembly.

6. A brake assembly according to claim 5, **characterized in that** each electro-mechanical actuator (120) comprises a housing (121) receiving a screw-and-nut system associated with driving the pusher (122) of said actuator, and an electric motor (123) associated with said housing, said housing (121) passing through the corresponding lug (117) onto which it is fastened directly.

7. A brake assembly according to claim 6, **characterized in that** the electric motor (123) of each electro-mechanical actuator (120) extends in a circumferential direction (Z1), and said motor (123) is also fastened to the ring portion (112) via an associated appendix (127) thereof disposed between two adjacent lugs (117).

8. A brake assembly according to any one of claims 1 to 7, **characterized in that** the one-piece unit (110) forming the ring (112) and the torsion tube (111) is made out of a single material.

## Patentansprüche

1. Flugzeugbremseinheit, umfassend einen Stapel (101) von Scheiben, der koaxial eine Radachse (11) umgibt, wobei der genannte Stapel abwechselnd aus Rotorscheiben (102), die drehfest mit dem Rad (12) verbunden sind, und aus Statorscheiben (103), die drehfest mit einem Torsionsrohr verbunden sind, besteht und zwischen ein hinteres Halteteil (106) und die Stößel (122) einer Vielzahl von elektromechanischen Aktuatoren (120) gepresst ist, die um den Umfang herum an einem vorderen Haltekranz angeordnet sind, **dadurch gekennzeichnet, dass** das Torsionsrohr (111) und der Kranz (112), der die elektromechanischen Aktuatoren (120) trägt, eine einstückige Einheit (110) bilden, und das hintere Halteteil (106) abnehmbar an der einstückigen Einheit (110) an einem Ende derselben befestigt ist.

2. Flugzeugbremseinheit nach Anspruch 1, **dadurch gekennzeichnet, dass** die einstückige Einheit (110), die Kranz (112) und Torsionsrohr (111) bilden, einen Einheitsflansch (114) im Bereich der Verbindung zwischen Kranz und Torsionsrohr aufweist, wobei sich der Flansch in einer Ebene erstreckt, die senkrecht zur Achse (X) der Einheit ist, und an einem von der Achse (11) vorstehenden Kragen (20) befestigt ist.

3. Flugzeugbremseinheit nach Anspruch 1 oder Anspruch 2, **dadurch gekennzeichnet, dass** die Befestigung des hinteren Halteteils (106) an der einstückigen Einheit (110) ebenso wie die der einstückigen Einheit (110) an der Achse (11) durch Bolzenverbindungsmittel (113; 115) gewährleistet wird.

4. Flugzeugsbremseinheit nach einem der Ansprüche 1 bis 3, **dadurch gekennzeichnet, dass** der Kranzabschnitt (112) der einstückigen Einheit (110) eine Vielzahl von Augen (117) umfasst, die radial vorstehen, wobei jedes Auge (117) einen elektromechanischen Aktuator (120) trägt.

5. Flugzeugbremseinheit nach Anspruch 4, **dadurch gekennzeichnet, dass** sich die Augen (117) des Kranzabschnittes (112) der einstückigen Einheit (110) in einer Ebene erstrecken, die gegenüber der Ebene des Befestigungsflansches (114) der Einheit nach vorne versetzt ist.

6. Bremseinheit nach Anspruch 5, **dadurch gekennzeichnet, dass** jeder elektromechanische Aktuator (120) ein Gehäuse (121) umfasst, in dem ein System aus Spindel-Mutter untergebracht ist, das dem Antrieb des Stößels (122) des Aktuators zugeordnet ist, sowie einen Elektromotor (123), der mit diesem Gehäuse verbunden ist, wobei das Gehäuse (121) das zugehörige Auge (117), an dem es direkt befestigt ist, durchsetzt.

7. Bremseinheit nach Anspruch 6, **dadurch gekennzeichnet, dass** sich der Elektromotor (123) jedes elektromechanischen Aktuators (120) in Umfangsrichtung (Z1) erstreckt und der genannte Motor (123) ebenfalls an dem Kranzabschnitt (112) über ein dazugehöriges Ansatzstück (127) desselben befestigt ist, das zwischen zwei angrenzenden Augen (117) angeordnet ist.

8. Bremseinheit nach einem der Ansprüche 1 bis 7, **dadurch gekennzeichnet, dass** die einstückige Einheit (110), die Kranz (112) und Torionsrohr (111) bilden, aus ein und demselben Material hergestellt ist.
